# EUROPÄISCHE PATENTANMELDUNG

(11) **EP 2 866 105 A1**
(43) Veröffentlichungstag der Anmeldung: **29.04.2015**
(21) Anmeldenummer: 13190142.3
(22) Anmeldetag: 24.10.2013
(51) Int. Cl.: G05B 19/042

(54) **Verfahren zur Generierung von Automatisierungsprogrammen**

(71) Anmelder: Siemens Aktiengesellschaft, 80333 München (DE)
(72) Erfinder: Djordjevic, Zvonko, 76149 Karlsruhe (DE); Gierling, Markus, 51469 Bergisch Gladbach (DE); Pohlan, Rudolf, 76337 Waldbronn (DE)

(57) **Zusammenfassung**

Die Erfindung betrifft ein Verfahren zur Generierung von Automatisierungsprogrammen für eine Automatisierungslösung, wobei mittels einer in Software implementierten Entwicklungsumgebung zumindest ein EM-Typ (10) angelegt wird, wobei der EM-Typ (10) für eine technische Einrichtung der Automatisierungslösung zumindest eine Grundfunktion (12), zumindest eine Rolle (20) und zumindest eine Basisanforderung (22) umfasst, wobei die oder jede Grundfunktion (12) eine Definition einer Schrittkette (14) mit Schritten (16) und Transitionen (18) umfasst, wobei die oder jede Basisanforderung (22) Anforderungen an eine Einzelsteuereinheit der Automatisierungslösung definiert und Befehle (24) und Status (26) umfasst und wobei Befehlsaufrufe (19) der Schritte (16) und Statusabfragen (21) der Transitionen (18) der Schrittkette (14) mit einer Rolle (20) und die Rolle (20) wiederum mit einem Befehl (24) oder einem Status (26) einer Basisanforderung (22) verknüpft sind bzw. ist.

## Beschreibung

Die Erfindung betrifft ein Verfahren zur Generierung von Automatisierungsprogrammen. Als Automatisierungsprogramm wird dabei ein Steuerungsprogramm oder eine Kollektion von Steuerungsprogrammen verstanden, das bzw. die zur Steuerung und/oder Überwachung eines technischen Prozesses, zum Beispiel eines Chargenprozesses, bestimmt und geeignet ist bzw. sind. Das oder jedes Steuerungsprogramm wird im Folgenden auch als Automatisierungslösung bezeichnet. Zur Automatisierungslösung gehört auch die Automatisierungshardware als Schnittstelle zwischen einem Steuerungsprogramm und dem technischen Prozess.

Die Automatisierung von Chargenprozessen einer industriellen Anlage wird meist im Vorfeld in einer Planungsphase zwischen einem Anlagenbetreiber (Kunde) und einem Leitsystemhersteller oder -lieferanten (zusammen im Folgenden als Lieferant bezeichnet) besprochen. Der Kunde hat dabei normalerweise keine genauen Kenntnisse über Details des konkreten Aufbaus der Anlage, speziell dann nicht, wenn die Anlage neu errichtet oder zur Erfüllung neuer oder zusätzlicher Automatisierungsfunktionen zumindest in Teilen neu errichtet wird. Auch der Lieferant hat zunächst keine genauen Kenntnisse über den konkreten Aufbau der Anlage. Der Lieferant nimmt vielmehr zunächst die Wünsche des Kunden auf. Dennoch werden in der Planungsphase die Grundfunktionen des Chargenprozesses - wie Dosieren, Temperieren, etc. - festgelegt und beschrieben.

Hier stellt sich das Problem, das Verhalten der Ablaufsteuerungen - die Grundfunktionen - bei Chargenprozessen exakt, detailliert und weitgehend unabhängig von der Einzelsteuerebene zu definieren, ohne konkrete Geräte auf der Einzelsteuerebene oder gar Implementierungen der Gerätesteuerungen bereits in dieser Phase kennen und damit definieren zu müssen.

Bei der später realisierten Automatisierungslösung, wenn bereits die eingesetzten Automatisierungsgeräte feststehen, werden die Ablaufsteuerungen zur Automatisierung der in der Anlage eingesetzten Automatisierungsgeräte auf der Basis einer jeweils verwendeten Programmiersprache dargestellt. Dies erfordert heute auf Seiten der damit befassten Spezialisten noch entsprechendes Wissen und entsprechende Erfahrung.

Nachdem die Grundfunktionen des jeweiligen Chargenprozesses normalerweise bereits in einer frühen Phase der Realisierung einer Automatisierungslösung für den Chargenprozess, nämlich normalerweise bereits in der Planungsphase oder zumindest als Ergebnis der Planungsphase, festliegen, wäre die Möglichkeit einer unabhängigen Definition der Grundfunktionen auf rein technologischer Ebene wünschenswert. Dies entkoppelt die genaue Spezifikation der Grundfunktionen von den Geräten auf der Einzelsteuerebene und schafft eine durchgängige Basis für die Beschreibung der Automatisierungslösung von der Planung bis zur Inbetriebnahme.

Dies wird erfindungsgemäß mit einem Verfahren mit den Merkmalen des Anspruchs 1 gelöst. Dabei ist bei einem Verfahren zur Generierung von Automatisierungsprogrammen für eine Automatisierungslösung Folgendes vorgesehen: Mittels einer in Software implementierten Entwicklungsumgebung wird zumindest ein technologischer EM-Typ angelegt. Das Kürzel "EM" steht dabei für den in der Norm ANSI/ISA88 verwendeten Begriff "Equipment Module". Auf diese Norm wird zur Auslegung des Bedeutungsumfangs der hier verwendeten Begriffe verwiesen. Ein "Equipment Module" ist eine technische Einrichtung einer zu automatisierenden Anlage, also zum Beispiel eine Dosiereinrichtung, eine Wiegeeinrichtung, eine Fördereinrichtung, eine Kühl- oder Heizeinrichtung, und so weiter. Der EM-Typ - und bei komplexen Anlagen eine Vielzahl von EM-Typen - dient zur technologischen Beschreibung der zur Automatisierung der jeweiligen Anlage realisierten Automatisierungslösung. Der EM-Typ umfasst für eine technische Einrichtung der Automatisierungslösung zumindest eine Grundfunktion, zumindest eine Rolle und zumindest eine Basisanforderung. Die oder jede Grundfunktion umfasst eine Definition einer oder mehrerer Schrittketten mit Schritten und Transitionen. Die oder jede Basisanforderung definiert Anforderungen an eine Einzelsteuereinheit der Automatisierungslösung, also zum Beispiel einen Sensor oder Aktor der Anlage, und umfasst Befehle und Status. Die Beschreibung der Aktionen der Schritte und der Bedingungen der Transitionen enthält Befehlsaufrufe (verwendeter Befehl, engl. Command Invocation) und Statusabfragen (verwendeter Status, engl. Status Invocation). Die Befehlsaufrufe und Statusabfragen sind mit einer Rolle und die Rolle ist wiederum mit einem Befehl oder einem Status einer Basisanforderung verknüpft. Dabei ist im Rahmen einer entsprechenden Definition des jeweiligen Befehls oder Status auch eine Parameterübergabe möglich (Bemerkung: Parameter können für Befehle und Status definiert werden). Die Rolle fungiert also als Schnittstelle zwischen den Schritten und Transitionen der Schrittkette auf der einen Seite und den Befehlen und Status der Basisanforderung auf der anderen Seite. Damit gelingt eine vollständige Entkopplung der Spezifikation der Schrittkette von der konkreten Automatisierungshardware, also von den konkreten Geräten der Einzelsteuerebene. Die Schritte und Transitionen sind mittels Rolle mit Befehlen und Status einer jeweiligen Einzelsteuereinheit, nämlich über die für deren Beschreibung definierten Basisanforderungen, verknüpft (Bemerkung: Da Schritte und Transitionen mit Hilfe von mehreren Befehlsaufrufen bzw. Statusabfragen beschrieben werden, können mehrere Geräte mittels Rolle angesprochen werden und zwar mit einer für jeden Befehlsaufruf bzw. Statusabfrage spezifischen Rolle). Die konkrete Realisierung solcher Basisanforderungen kann aber bei der vollständigen Definition der Schrittkette oder einer Mehrzahl von Schrittketten außer Acht bleiben und zu einem späteren Zeitpunkt erfolgen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin.

Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Schließlich ist darauf hinzuweisen, dass das hier angegebene Verfahren auch entsprechend der abhängigen Vorrichtungsansprüche weitergebildet sein kann und umgekehrt.

Bei einer besonderen Ausführungsform des Verfahrens wird mittels eines Softwaregenerators automatisch ein Automatisierungsprogramm in Form von Schritt- und Transitionsprogrammen einer Ablaufsteuerung erzeugt. Dabei werden als Schritte und Transitionen in einem solchen Programm hardware- und/oder projektspezifische Implementierungen von verwendeten Befehlen und Status einer Basisanforderung eingesetzt. Dieses Einsetzen erfolgt auf Basis der in der Schrittkette des EM-Typs definierten Schritte und Transitionen, der Befehlsaufrufe und Statusabfragen und deren Verknüpfung mit jeweils einer Rolle sowie der Verknüpfung einer Rolle mit jeweils genau einem Befehl oder einem Status einer Basisanforderung. Schritte und Transitionen werden dabei mit Hilfe von Befehlsaufrufen unter Verwendung eines Befehls und Statusabfragen unter Verwendung eines Status definiert. Aus der ursprünglichen Schrittkette mit den dortigen indirekten Verweisen auf Befehle und Status einer Basisanforderung wird eine Abfolge der konkreten Implementierung solcher Befehle und Status.

Der Vorteil der Erfindung und ihrer Ausgestaltungen besteht damit insbesondere darin, dass zur Planung einer Automatisierungslösung und zur automatischen Generierung von Automatisierungsprogrammen auf Basis einer solchen Planung jetzt von den jeweiligen technologischen Anforderungen ausgegangen werden kann. Dies erlaubt auf der einen Seite eine von der konkreten Automatisierungshardware unabhängige Sprachdefinition auf technologischer Ebene für Grundfunktionstypen in einer frühen Planungsphase und lässt auf der anderen Seite in einer späteren Planungs- oder Engineeringphase eine leichte Adaptierbarkeit auf die konkrete Anlagenstruktur zu. Die resultierende, technologische Beschreibungssprache für Grundfunktionen erlaubt mit Hilfe des Sprachelements "Rolle" ein Ansprechen der Einzelsteuerebene unabhängig von konkreten Anlagenstrukturen und -konfigurationen (wie Messstellen, etc.). Grundfunktionen können damit vollständig unabhängig von den konkreten Geräten der Einzelsteuerebene definiert werden. Die technologische Beschreibungssprache für Grundfunktionen ist als technologische "Hülle" vorteilhaft auch direkt für den Anlagenfahrer auf einem Bediengerät einsetzbar, weil sie durchgängig auf technologischer Ebene definiert ist. Grundfunktionen einer Anlage können jetzt auch ohne detailliertes programmiertechnisches Know-how für Automatisierungsgeräte geplant werden.

Als ein besonderer Vorteil des hier vorgestellten Ansatzes müssen die Grundfunktionen nicht mehr bezüglich der Schritte und Transitionen einzeln programmiert werden. Dies kann mit Hilfe eines Softwaregenerators erfolgen, der dafür an den zentral programmierten Befehlen und Status ansetzt. Der Implementierungsaufwand für Grundfunktionen wird mit Hilfe des Verfahrens deutlich verringert.

Ein weiterer Vorteil ergibt sich schließlich auch aus der Möglichkeit der quasi automatischen Dokumentation der Verfahrenstechnik. Hierdurch wird die Abstimmung zwischen dem Verfahrenstechniker auf Kundenseite und dem Projektierungsingenieur auf Automatisierungs-/Steuerungsseite wesentlich vereinfacht.

Die oben genannte Aufgabe wird auch mit einem Automatisierungsgerät, nämlich zum Beispiel mit einem als Programmiergerät fungierenden Automatisierungsgerät, gelöst, das dafür Mittel zur Ausführung des Verfahrens und einzelner oder mehrerer spezieller Ausführungsformen umfasst. Die Erfindung ist dabei bevorzugt in Software implementiert. Die Erfindung ist damit einerseits auch ein Computerprogramm, nämlich ein als Entwicklungsumgebung zum Erstellen und Generieren von Automatisierungsprogrammen fungierendes Computerprogramm, mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch ein Automatisierungs- oder Programmiergerät, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Das Ausführungsbeispiel ist nicht als Einschränkung der Erfindung zu verstehen. Vielmehr sind im Rahmen der vorliegenden Offenbarung auch Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: die Struktur eines dem hier vorgestellten Ansatz zugrunde liegenden Datentyps,
- FIG 2: eine einfache Anlage als Beispiel für ein Automatisierungsprojekt
- FIG 3: eine Struktur eines Datentyps gemäß FIG 1 zur Modellierung einer Einrichtung aus der in FIG 2 gezeigten Anlage und
- FIG 4: eine Schrittkette gemäß dem Datentyp in FIG 3.

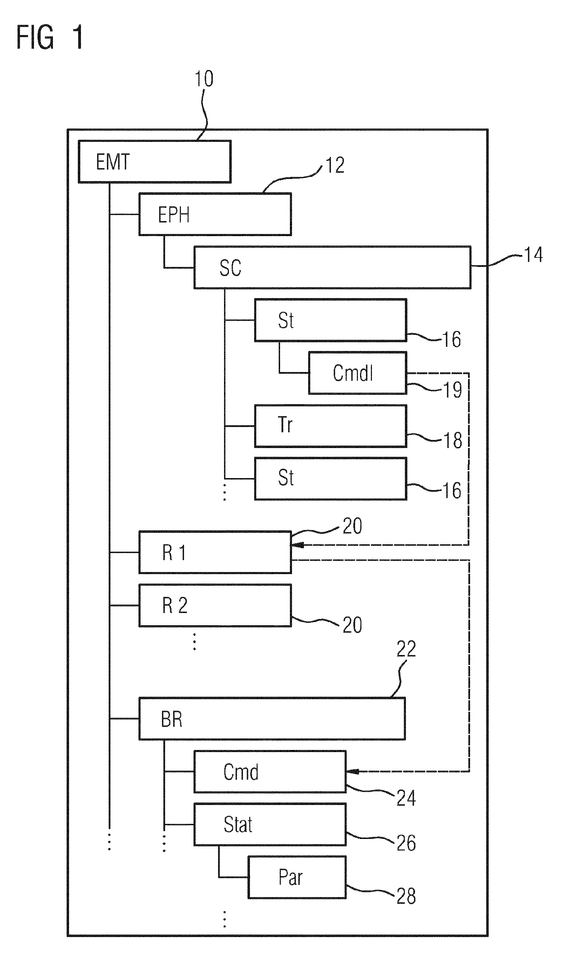

Die Darstellung in FIG 1 zeigt schematisch vereinfacht die Struktur eines Datentyps oder Templates 10 zur Modellierung einer technischen Einrichtung einer zu automatisierenden, grundsätzlich beliebigen Anlage. Die im Folgenden verwendeten Abkürzungen lehnen sich an die Norm ANSI/ISA88 an. Dort wird eine technische Einrichtung als Equipment Module - kurz EM - bezeichnet. Die in der Darstellung verwendete Bezeichnung "EMT" bedeutet entsprechend "Typ oder Template einer technischen Einrichtung". Im Weiteren wird dieser Datentyp kurz als EM-Typ 10 bezeichnet.

Jede technische Einrichtung realisiert zumindest eine Grundfunktion 12, zum Beispiel eine Grundfunktion zum Dosieren eines zu verarbeitenden Rohstoffs. Entsprechend umfasst der EM-Typ 10 Möglichkeiten zur Modellierung zumindest einer Grundfunktion 12. In der Darstellung in FIG 1 ist exemplarisch eine Situation mit nur einer Grundfunktion 12 gezeigt. In FIG 1 ist die dort symbolisch gezeigte Grundfunktion 12 entsprechend dem englischen Begriff aus der Norm ANSI/ISA88 kurz als EPH (Equipment Phase) dargestellt.

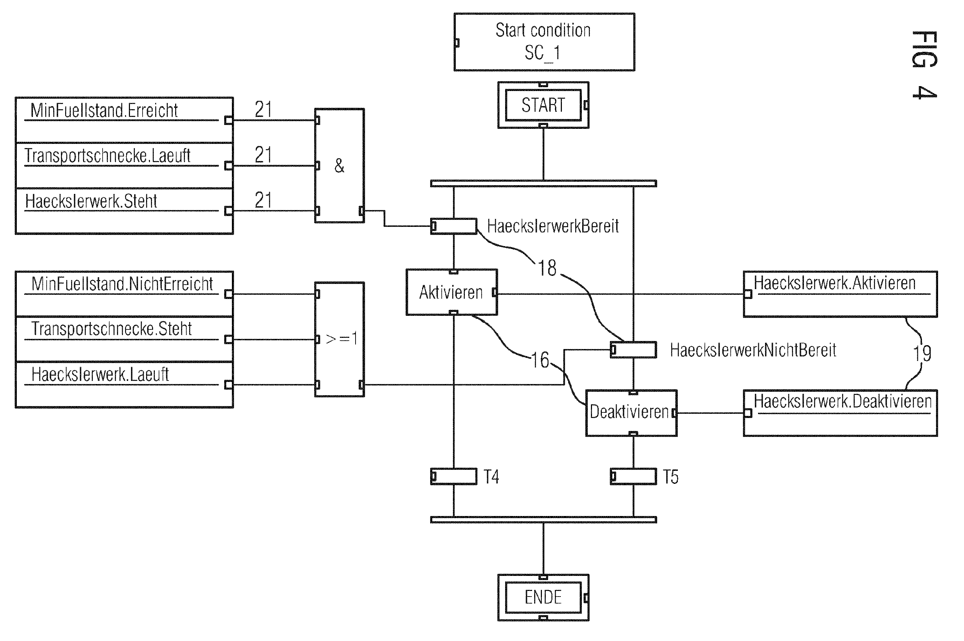

Grundfunktionen 12 sind im Sinne der Norm ANSI/ISA88 technische Funktionen (Equipment Phase/s), insbesondere bei Chargenprozessen. Eine Grundfunktion 12 definiert zum Beispiel eine Ablaufsteuerung mit ihren Fahrweisen und umfasst entsprechend eine Schrittkette 14 ("SC" für "Sequence Chain"). Zu der Grundfunktion 12 und der davon umfassten Schrittkette 14 gehören eine Anzahl von Schritten 16 ("St" für "Step") und Transitionen 18 ("Tr" für "Transition"). Diese Schritte 16 und Transitionen 18 sowie deren Abfolge definieren im eigentlichen Sinne die Funktionalität der Ablaufsteuerung. Jeder Schritt 16 umfasst zumindest einen Befehlsaufruf 19 ("CmdI" für "CommandInvocation) und jede Transition 18 umfasst zumindest eine Statusabfrage 21 (in FIG 1 nicht gezeigt; siehe FIG 4) .

Gemäß dem hier vorgestellten Ansatz umfasst jeder EM-Typ 10 des Weiteren zumindest eine Rolle 20 ("R" für "Role"). Hier sind exemplarisch zwei Rollen 20 ("R 1" und "R 2") gezeigt. Die Anzahl der möglichen Rollen 20 ist grundsätzlich unbegrenzt. Die Rollen 20 fungieren als Schnittstelle zwischen der technologischen Beschreibung der Grundfunktion 12 und einer Implementierungsmöglichkeit einzelner Aspekte der Grundfunktion 12. Zur Modellierung solcher Implementierungsmöglichkeiten ist eine Beschreibung einer Basisanforderung 22 ("BR" für "Basic Requirement") an eine jeweilige Einzelsteuereinheit vorgesehen. Diese umfasst eine Spezifikation zumindest eines Befehls 24 ("Cmd" für "Command") und/oder zumindest eines Status 26 ("Stat" für "Status"). Jedem Status 26 sind ein oder mehrere Parameter 28 ("Par" für "Parameter") zugeordnet. Eine Einzelsteuereinheit ist zum Beispiel ein Antrieb, ein Ventil, ein Endschalter usw.

Die Beschreibung einer Funktionalität einer Einzelsteuereinheit im Wege einer Spezifikation einer Basisanforderung 22 beschränkt sich dabei bewusst auf die jeweiligen Anforderungen an ein jeweiliges Gerät der Einzelsteuerebene und bezieht sich nicht auf die Realisierung solcher Anforderungen. Die Beschreibung der jeweiligen Basisanforderung 22 kann daher auf der Ebene der Spezifikation eines EM-Typs 10 die Spezifika einer späteren konkreten Gerätehardware vollständig außer Acht lassen.

Im Interesse einer besseren Lesbarkeit der weiteren Beschreibung wird diese am Beispiel einer bewusst einfach gewählten Ablaufsteuerung fortgesetzt. Dabei wird von einer Anlage 40 zum Entsaften von Äpfeln und zum Abfüllen des Apfelsafts in Flaschen ausgegangen.

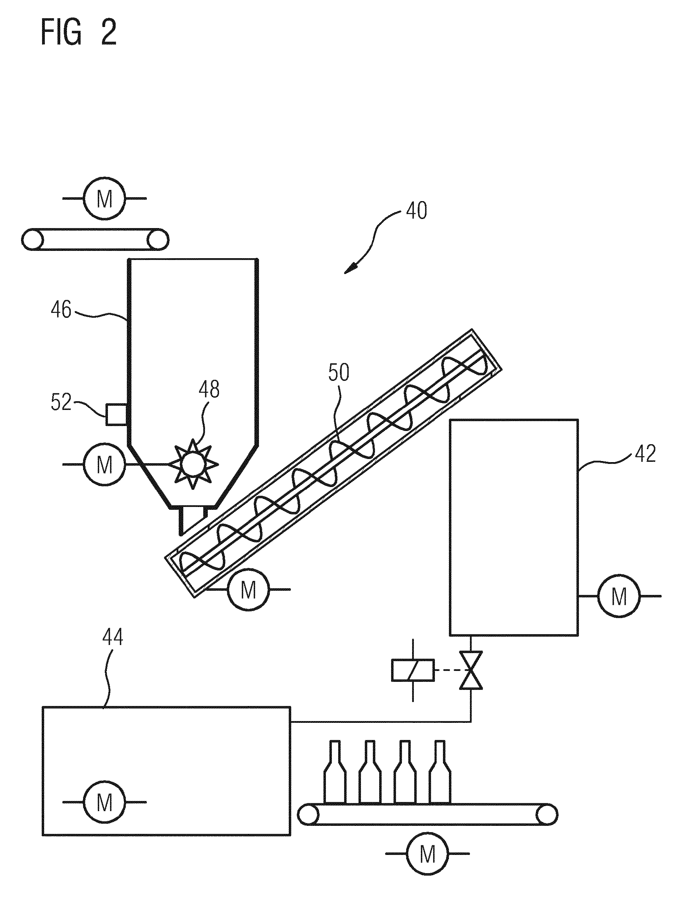

Eine solche Anlage 40 ist schematisch vereinfacht in FIG 2 dargestellt. Die Anlage 40 umfasst einen Entsafter, zum Beispiel in Form einer Zentrifuge 42, und eine Flaschenabfüllanlage 44. Um das Entsaften zu erleichtern, ist es sinnvoll, wenn die Äpfel vor dem Entsaften zerkleinert werden. Dann umfasst die Anlage 40 auch einen als Häckslereinheit fungierenden Häcksler 46. Zwischen den bisher genannten Einheiten Häcksler 46, Zentrifuge 42 und Abfüllanlage 44 erfolgt ein Transport der jeweiligen Rohstoffe. Der Transport sowie das Füllen und Entleeren des Häckslers 46 und der Zentrifuge 42 erfolgt bedarfsorientiert. Die Funktionalität der Abfüllanlage 44 wird hier nicht betrachtet.

Stattdessen wird exemplarisch die Funktionalität des Häckslers 46 herausgegriffen, bei dem es sich zum Beispiel um einen aufrecht stehenden und oben offenen Behälter handelt, der am Boden ein motorisch angetriebenes Häckslerwerk 48 und im Anschluss an das Häckslerwerk 48 eine Öffnung aufweist, an die sich zum Transport der Apfelhäcksel zum Beispiel eine bis zur Zentrifuge 42 reichende Transportschnecke 50 anschließt. Solange ein vorgegebener maximaler Füllgrad des Häckslers 46 nicht erreicht ist, kann dieser mit Äpfeln befüllt werden. Das Häckslerwerk 48 kann aktiv sein, sobald ein vorgegebener minimaler Füllgrad des Häckslers 46 erreicht ist und solange die Transportschnecke 50 unter dem Häcksler 46 läuft und die jeweils entstehenden Häcksel abtransportiert. Das Erreichen eines minimalen Füllgrads wird dabei zum Beispiel mittels eines Füllstandswächters 52 erfasst.

Dies ist ein Beispiel für eine einfache technologische Beschreibung einer technischen Einrichtung (Equipment Module), nämlich der technischen Einrichtung "Häcksler" 46, wie sie während der Planungsphase der hier beschriebenen Anlage entsteht.

Übertragen auf die Darstellung in FIG 1 bedeutet dies, dass eine Modellierung des Häckslers 46 in Form eines EM-Typs 10 zur Beschreibung der Ablaufsteuerung zum Beispiel die folgenden Schritte 16 und Transitionen 18 umfasst (hier zunächst verbal beschrieben):
WENN (ein minimaler Füllgrad erreicht ist)
UND (die Transportschnecke läuft)
UND (das Häckslerwerk nicht bereits läuft)
DANN (wird das Häckslerwerk aktiviert)
SONST (wird das Häckslerwerk deaktiviert)

Wenn die Einzelsteuerebene mit allen Messstellen, nämlichen Instanzen von Einzelsteuereinheiten, die analog zu den oben erwähnten EMTs auch als CMTs (Control Module Type/Template; Einzelsteuereinheit = Control Module) bezeichnet werden, konkret festgelegt ist, werden auf dieser Basis EM-Typen 10 instanziiert und mit den konkret verwendeten Geräten mittels Rolle 20 verbunden. Die Rollen 20 der Instanzen der EM-Typen 10 zeigen jeweils auf ein konkretes Gerät (CMT-Instanz) der Einzelsteuerebene.

Die Überprüfung, ob der minimale Füllgrad erreicht ist und ob die Transportschnecke 50 läuft, sind Statusabfragen in Bezug auf bisher noch nicht bekannte Geräte der Einzelsteuerebene, zum Beispiel den Füllstandswächter 52 und einen Antrieb. Die Art und Weise, wie das Häckslerwerk 48 realisiert wird, ist ebenfalls noch nicht bekannt. Entsprechend ist noch nicht bekannt, wie dieses konkret aktiviert wird. Bekannt ist allerdings, dass das Häckslerwerk 48 aktivierbar sowie, wenn die oben skizzierten Bedingungen nicht erfüllt sind, deaktivierbar sein muss.

Zur Entkopplung von der bisher noch nicht bekannten Realisierung der Geräte der Einzelsteuerebene sind die Rollen 20 (FIG 1: "R 1", "R 2", etc.) vorgesehen. Entsprechend wird die Überprüfung, ob der minimale Füllgrad erreicht ist, zum Beispiel auf eine Rolle 20 "MinFuellstand" und einen Status 26 "Erreicht" abgebildet. Die so definierte Rolle 20 verweist wiederum auf die Beschreibung einer Basisanforderung 22, zum Beispiel auf eine Beschreibung einer Funktionalität eines digitalen Füllstandswächters 52. Die Beschreibung der Basisanforderung 22 "Grenzfuellstand" realisiert zum Beispiel nur Status, also zum Beispiel einen Status, ob der Grenzfüllstand erreicht ist (Status 26 "Erreicht"). Für das Häckslerwerk 48 werden zum Beispiel die Befehlsaufrufe 19 "Haeckslerwerk.Aktivieren", "Haeckslerwerk.Deaktivieren" und die Statusabfrage 21 "Haeckslerwerk.Steht" verwendet. Als Beschreibung einer zugehörigen Basisanforderung 22 an eine Einzelsteuereinheit zum automatischen Betrieb des Häckslerwerks 48 kommt eine Beschreibung eines Antriebs in Betracht (Basisanforderung 22 "Antrieb"). Eine solche Beschreibung eines Antriebs umfasst zum Beispiel die Befehle 24 "Aktivieren" und "Deaktivieren" und die Status 26 "Läuft" und "Steht". Die Befehlsaufrufe 19 und Statusabfragen 21 können dann mittels Rollen 20 auf diese Befehle 24 und diese Status 26 abgebildet werden. Der Befehlsaufruf 19 "Haeckslerwerk.Aktivieren" verweist dann mittels Rolle 20 "Haeckslerwerk" auf den Befehl 24 "Aktivieren", der Befehlsaufruf 19 "Haeckslerwerk.Deaktivieren" mittels Rolle 20 "Haeckslerwerk" auf den Befehl 24 "Deaktivieren" und die Statusabfrage 21 "Haeckslerwerk.Steht" mittels Rolle 20 "Haeckslerwerk" auf den Status 26 "Steht". Das Abbilden eines Befehlsaufrufs 19 oder einer Statusabfrage 21 mittels Rolle 20 auf einen Befehl 24 oder einen Status 26 einer Basisanforderung 22 meint dabei jede geeignete Referenzierung, die eindeutig eine Beziehung zwischen Befehlsaufruf 19 oder Statusabfrage 21 mittels einer Rolle 20 einerseits und dem referenzierten Befehl 24 oder Status 26 andererseits beschreibt.

Eine Rolle 20 umfasst also zum Beispiel einen Namen, mit dem sie aus der Beschreibung der Schrittkette 14 ansprechbar ist, und eine Referenz auf einen Befehl 24 oder einen Status 26 einer Basisanforderung 22.

Die Verknüpfung eines Schritts 16 oder einer Transition 18 der Schrittkette 14 mit einer Rolle 20 und über die Rolle 20 mit einem Befehl 24 oder einem Status 26 einer Basisanforderung 22 kann rein textuell erfolgen. Dann wird ein einem Befehlsaufruf 19 oder einer Statusabfrage 21 nach Art eines Namens zugewiesener Bezeichner für die Rolle 20 und den Befehl 24 oder Status 26 (zum Beispiel "Haeckslerwerk.Aktivieren") bei einer Definition eines Schritts 16 oder einer Transition 18 verwendet. Alternativ zu einer Verwendung solcher Bezeichner kommt auch eine Verknüpfung mittels einer Referenzierung allgemeiner Art in Betracht, zum Beispiel in Form von Zeigern.

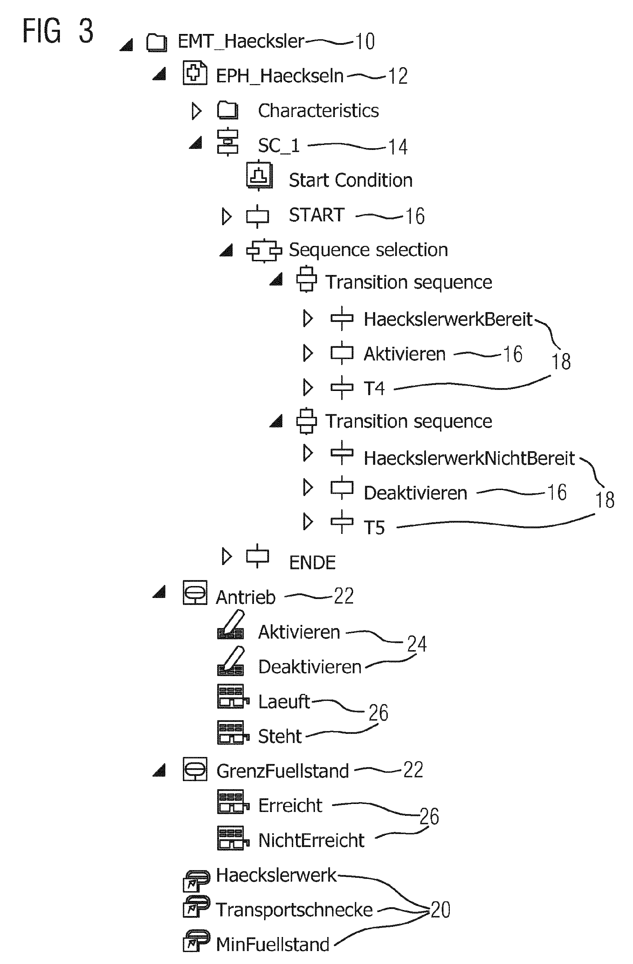

Für einen Befehlsaufruf 19 eines Schritts 16 der Schrittkette 14 und einen Befehl 24 einer Basisanforderung 22 ist diese Verknüpfung in der Darstellung in FIG 1 in Form zweier Pfeile ausgehend vom betreffenden Befehlsaufruf 19 eines Schritts 16 zur referenzierten Rolle 20 und ausgehend von dieser Rolle 20 zum referenzierten Befehl 24 gezeigt. Die Darstellung in FIG 3 zeigt einen EM-Typ 10 zur Beschreibung der hier erläuterten Funktion des Häckslers 46 sowie der Transportschnecke 50 aus FIG 2. Bei dem in FIG 3 gezeigten EM-Typ 10 ist also der Häcksler 46 zusammen mit der Transportschnecke 50 als technische Einrichtung (EM) aufgefasst worden.

Mit einzelnen Befehlsaufrufen 19 oder Statusabfragen 21 und der oben exemplarisch gewählten Schreibweise einzelner Bezeichner sowie einer entsprechenden Rolle 20 für die Transportschnecke 50 sowie den Füllstandswächter 52 lautet die weiter oben angegebene Schrittkette 14 zum Beispiel wie folgt:

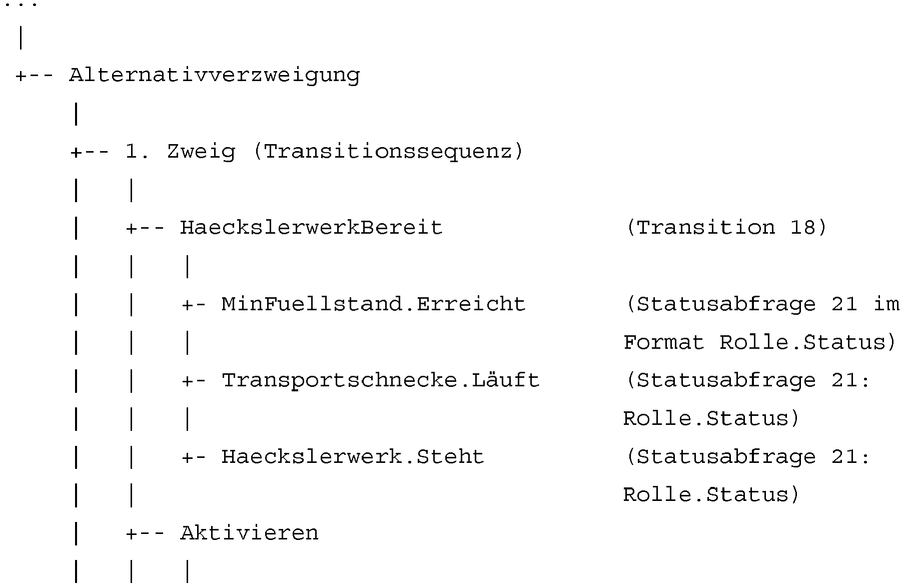

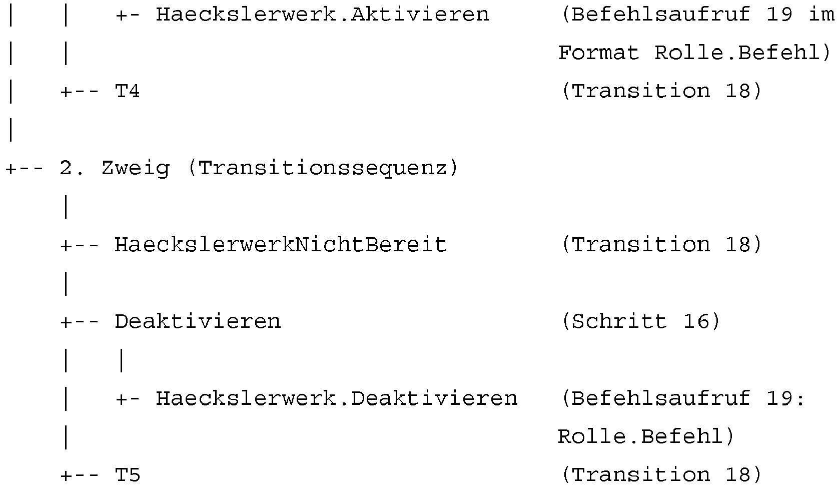

Man erkennt, dass dies eine Umsetzung der weiter oben angegebenen Schrittkette 14 ist, deren Funktionalität sich beim Lesen beinahe genauso gut erschließt, wie die weiter oben angegebene, eher natürlichsprachliche Darstellung der Schrittkette 14. Eine andere Darstellung der Schrittkette ist in FIG 4 gezeigt.

Letztlich ist das Häckslerwerk 48 auf der Einzelsteuerebene eine motorisch angetriebene Einrichtung zum Zerkleinern der Äpfel. Automatisierungstechnisch relevant ist dabei nur der Antrieb. Eine zu automatisierende Anlage umfasst oftmals eine Vielzahl von Antrieben. In der Darstellung in FIG 2 sind ohne sonstige nähere Bezeichnung mehrere Antriebe jeweils als Elektromotor ("M") dargestellt. Aufgrund einer möglichen Vielzahl grundsätzlich gleichartiger Geräte auf der Einzelsteuerebene, also aufgrund mehrerer von der jeweiligen Anlage 40 umfasster Antriebe, kommt hinsichtlich der Spezifikation einer Basisanforderung 22 in Betracht, dass diese selbst von einem Objekttyp ausgeht, also zum Beispiel von einem zur Modellierung von Basisanforderungen 22 für Antriebe vorgesehenen Objekttyp (nicht gezeigt). Jeder Antrieb kann aktiviert und deaktiviert werden. Zur Ermittlung, ob ein Antrieb aktiv oder inaktiv ist, ist eine diesbezügliche Statusdefinition sinnvoll. Das oben beschriebene Beispiel kann auf dieser Basis noch so fortgebildet werden, dass ein Objekttyp zur Modellierung von Basisanforderungen für Antriebe zur Verfügung steht und dass zur Modellierung der Basisanforderung 22 an das Häckslerwerk 48 und an die Transportschnecke 50 im Rahmen der Spezifikation des EM-Typs 10 Instanzen eines solchen Objekttyps gebildet werden. Solche Instanzen werden üblicherweise mit einem aussagekräftigen Bezeichner gebildet, also zum Beispiel "Häckslerwerk" und "Transportschnecke".

Die Modellierung der technologischen Funktion beider in der Schrittkette 14 verwendeten Antriebe, des Antriebs des Häckslerwerks 48 und des Antriebs der Transportschnecke 50, ist auf einen gemeinsamen, zugrunde liegenden Objekttyp zurückgeführt, der entsprechend nur einmal definiert werden muss. Dabei bleibt auch - nämlich aufgrund individueller Instanzen eines solchen Objekttyps - erkennbar, dass dem Häckslerwerk 48 wie auch der Transportschnecke 50 in technologischer Hinsicht die Funktionalität eines Antriebs zugrunde liegt.

Damit ist für die Definition von Grundfunktionen 12 eine formal syntaktisch festgelegte Beschreibungssprache oberhalb der Programmiersprache IEC 61131-3 (Sequential Function Chart; SFC) - im Folgenden kurz als SFC bezeichnet - eingeführt. Diese ist zum einen für eine durchgängig auf technologischer Ebene erfolgende Definition und Beschreibung von Grundfunktionen 12 geeignet. Zum anderen beschränkt sie sich bewusst auf die Anforderungen an die Geräte der Einzelsteuerebene. Schließlich eliminiert sie für die Definition des Verhaltens von Schritten 16 und Transitionen 18 der Schritt- oder Ablaufketten 14 die eingangs genannten Nachteile der Programmiersprache SFC. Die resultierende neue Beschreibungssprache ist damit speziell auch für den Einsatz bereits in der Anlagenplanungsphase geeignet. Die neue Beschreibungssprache ist aber durchgängig bis zur Inbetriebnahme und auch bei späteren Erweiterungen oder im Wartungsfall verwendbar, denn die während der Planungsphase erstellte und im Verlauf der Planungsphase ggf. konkretisierte Beschreibung bildet durchgängig die Basis für die zur Automatisierung der jeweiligen Anlage 40 generierte Automatisierungslösung.

Die Besonderheit liegt dabei darin, dass eine anforderungsorientierte technologische Definitionssprache für Grundfunktionen 12 eines Chargenprozesses mit Hilfe einer Kombination von neuen Sprachelementen, nämlich Rolle 20, Basisanforderung 22 und Befehl 24 bzw. Status 26 sowie Befehlsaufruf 19 und Statusabfrage 21, geschaffen wurde. Diese erlaubt das Ansteuern der Geräte der Einzelsteuerebene in den Schritten 16 und Transitionen 18 einer Ablaufsteuerung auf eine Art und Weise zu spezifizieren, die keinerlei Kenntnisse über eine konkrete Anlagenstruktur auf der Einzelsteuerebene bzw. der Gerätesteuerungen erfordert. (Bemerkung: Die anforderungsorientierte Definitionssprache übernimmt bezüglich der topologischen Definition der Schrittketten 14 der Ablaufsteuerung die Definition der Programmiersprache IEC 61131-3 Sequential Function Chart (SFC) mit den Sprachelementen Schritt (engl. Step), Transition (engl. Transition), etc., weil dieser Sprachanteil auch auf technologischer Ebene verständlich ist.)

Grundfunktionen 12 lassen sich auf diese Art und Weise - mit den neuen Beschreibungsmitteln Rolle 20, Basisanforderung 22 und Befehl 24 bzw. Status 26 sowie Befehlsaufruf 19 und Statusabfrage 21 - technologisch bereits in einer frühen Planungsphase der Anlage unabhängig von den konkreten Geräten der Einzelsteuerebene (Messstellen) und der Anlagenstruktur festlegen. Die konkrete Verbindung der Grundfunktionen 12 einer Teilanlage zur Einzelsteuerebene (Motor-, Ventil-, Pumpensteuerungen, etc.) kann damit in eine spätere Phase der Anlagenplanung verlagert werden, indem den im Kontext der technischen Einrichtungen definierten Rollen 20 dann konkrete Einzelsteuereinheiten (Messstellen) der Teilanlage zugeordnet werden.

Allgemein kann der hier vorgestellte Ansatz wie folgt charakterisiert werden:
Als Basis für eine von der konkreten Realisierung unabhängige und anforderungsorientierte Definition von Grundfunktionen 12 für insbesondere Chargenprozesse einer zu automatisierenden industriellen Anlage werden an der zugeordneten technischen Einrichtung Rollen 20 für die notwendigen Geräte auf der Einzelsteuerebene sowie die relevanten Anforderungen an die notwendigen Geräte auf der Einzelsteuerebene als Beschreibungsmittel auf technologischer Ebene definiert. Die Anforderungen an die notwendigen Geräte auf der Einzelsteuerebene werden als ausführbare Befehle 24 und Statusabfragen 26 auf technologischer Ebene definiert. Befehle 24 und Status 26 können mit Parametern versehen werden.

Jede Rolle 20 wird dabei eindeutig genau einer Beschreibung einer Basisanforderung (Anforderungsbeschreibung) 22 eines auf der Einzelsteuerebene notwendigen Geräts zugeordnet. Einer Basisanforderung 22 können dabei auch mehrere Rollen 20 zugeordnet werden, falls die Anforderungen an das Gerät übereinstimmen.

Das Verhalten der Schritte 16 und Transitionen 18 der Ablaufsteuerung der Grundfunktion 12 wird technologisch definiert, indem die an der technischen Einrichtung im Kontext der (Geräte-)Anforderungen vereinbarten Befehle 24 bzw. Status 26 mittels (Geräte-)Rolle 20 verwendet werden, d.h. eine Gerätefunktion wird mittels Rolle 20 und Befehls- bzw. Statusname 24, 26 angesprochen. (Jeder mittels Rolle 20 verwendete Befehl 24 bzw. Status 26 erhält dabei zusätzlich einen eindeutigen Namen für die Verwendungsstelle.) Die Befehlsaufrufe 19 bzw. Statusabfragen 21 können dabei auch elementar mit Standardfunktionen - wie booleschen Operatoren, etc. - zu einem Netzwerk verknüpft werden. Befehlsaufrufe 19 bzw. Statusabfragen 21 entsprechen der Definition der Befehle 24 und Status 26 inklusive der Parameter, wie sie im Rahmen der Basisanforderung 22 eines Geräts beschrieben werden.

Die topologischen Beschreibungsmittel der Schrittketten 14 der Ablaufsteuerung - wie Schritte 16, Transitionen 18, etc. - einer Grundfunktion 12 werden gemäß der Definition der Programmiersprache SFC in diesem Verfahren für die technologische Beschreibung übernommen.

Diese technologischen Beschreibungsmittel bieten zugleich die Basis für einen Softwaregenerator, der anhand der Beschreibung des Verhaltens der Schritte 16 und Transitionen 18 einzelner oder mehrerer Schrittketten 14 automatisch anhand der technologischen Definition eine Ablaufsteuerung als Ablaufsteuerungsprogramm gemäß IEC 61131-3 vollständig erstellen kann. Darüber hinaus stellt die neuartige anforderungsorientierte Definitionssprache auch die Basis für eine Visualisierung der Ablaufsteuerung dar. Zurückkommend auf das oben genannte Beispiel kann zur Visualisierung der technologischen Beschreibung der Ablaufsteuerung zum Beispiel jede erfüllte Bedingung mit einer vorgegebenen Farbe hervorgehoben werden, während nicht erfüllte Bedingungen in einer Standardfarbe erscheinen. Damit bildet die technologische Beschreibung selbst die Grundlage für deren Visualisierung.

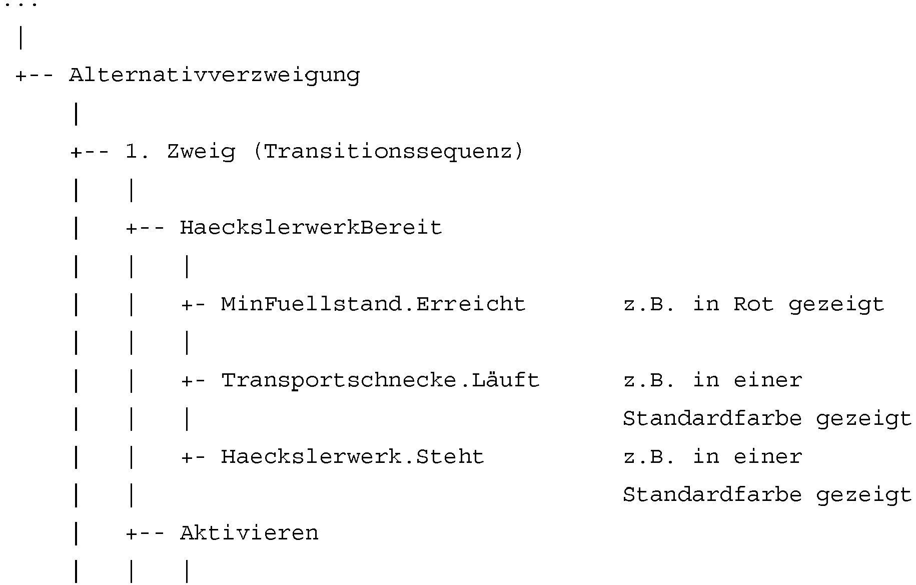

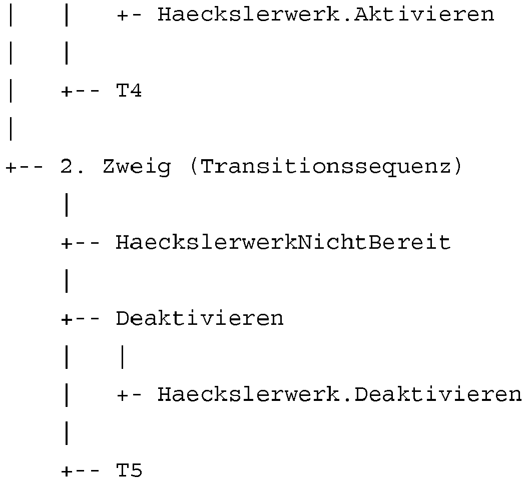

Dann kann der Anlagenfahrer, der zum Beispiel klären muss, warum das Häckslerwerk 48 nicht eingeschaltet wird, unmittelbar erkennen, von welchen Bedingungen die Aktivierung des Häckslerwerks 48 abhängt und welche Bedingungen eventuell nicht erfüllt sind. Wenn sich dabei zum Beispiel herausstellt, dass die Transportschnecke 50 unter dem Häcksler 46 nicht läuft, kann der Anlagenfahrer an anderer Stelle der Ablaufsteuerung überprüfen, warum die Transportschnecke 50 nicht läuft und so weiter. Die Visualisierung erfolgt dabei auf der Ebene der neuen technologischen Beschreibungssprache, die beinahe wie eine natürlichsprachliche Funktionsbeschreibung ohne Weiteres verständlich ist.

Neben den Schrittketten 14 der Grundfunktionen 12 werden in gleicher Weise optional auch die Befehlsaufrufe 19 und Statusabfragen 21 inklusive eventueller Parameter zusammen mit ihrer Rolle 20 für die Visualisierung des Schritt- bzw. Transitionsverhaltens auf einem Bedien- und Beobachtungssystem nutzbar gemacht, indem sie in ein kompatibles Format gewandelt, transferiert und bevorzugt als graphische Blöcke angezeigt werden.

Als Basis für einen generischen Softwaregenerator für die Schritt- und Transitionsprogramme der Ablaufsteuerung einer Grundfunktion 12 sieht der Ansatz vor, dass den technologischen Beschreibungsmitteln Befehl 24 und Status 26 eine konkrete Implementierung bevorzugt mit den Mitteln der Programmiersprachen der Norm IEC 61131-3 (KOP, FUP, AWL, ST) zuordenbar sind. Wenn bei der Spezifikation einer Basisanforderung 22 für einen Antrieb die Befehle 24 "Aktivieren" und "Deaktivieren" vorgesehen wurden, besteht entsprechend die Möglichkeit, jeden derartigen Befehl 24 - und analog auch jeden Status 26 - mit einer konkreten Implementierung zu verknüpfen. Zum Aktivieren und Deaktivieren eines Antriebs kommt ein Funktionsbaustein (zum Beispiel ein Motor-Baustein) in Betracht. Die Befehle 24 "Aktivieren" und "Deaktivieren" verwenden Parameter eines solchen Funktionsbausteins und innerhalb des Funktionsbausteins erfolgt durch dessen Parametrierung die Festlegung, wie der konkrete Antrieb aktiviert und deaktiviert wird, also welches Signal an welcher Adresse in den Prozess gegeben werden muss, damit der Antrieb startet oder gestoppt wird.

Für jeden definierten Befehl 24 bzw. Status 26 kann dabei als wesentlicher Bestandteil des Generierungsverfahrens eine spezifische Implementierung in Abhängigkeit der zugeordneten Rollen 20 vorgenommen werden. Der Softwaregenerator setzt an den Verwendungsstellen (Befehlsaufrufe 19, Statusabfragen 21) der technologisch definierten Befehle 24 und Status 26 in den Schritten 16 und Transitionen 18 der Ablaufsteuerung der Grundfunktion 12 deren Implementierungen gemäß IEC 61131-3 ein. Als Besonderheit des Verfahrens kann das Einsetzen der Implementierung an den Verwendungsstellen der Befehle 24 und Status 26 auch in Abhängigkeit von der Rolle 20 erfolgen, indem eine rollenspezifische Implementierung eingesetzt wird.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen. Einzelne im Vordergrund stehende Aspekte der hier eingereichten Beschreibung lassen sich damit kurz wie folgt zusammenfassen:
Die von den konkreten Geräten der Einzelsteuerebene unabhängige, anforderungsorientierte Definition von Grundfunktionen 12 für insbesondere Chargenprozesse einer zu automatisierenden industriellen Anlage innerhalb eines EM-Typs 10 erfolgt auf Basis der Schritte 16 und Transitionen 18 der Schrittkette(n) 14, indem mittels einer Rolle 20 auf Befehle 24 und Status 26 verwiesen wird, wie sie zur tatsächlichen Realisierung der Funktion der Schritte 16 und Transitionen 18 notwendig sind. Die dabei verwendeten Befehle 24 und Status 26 werden im Rahmen einer Definition von Basisanforderungen 22 an ein Gerät der Einzelsteuerebene festgelegt. Die Rolle 20 verknüpft Befehlsaufrufe 19 der Schritte 16 und Statusabfragen 21 der Transitionen 18 mit Befehlen 24 und Status 26, entkoppelt diese aber auch voneinander. Die Anforderungen an die vorausgesetzten Geräte der Einzelsteuerebene (nicht die Geräte selbst) werden dabei zentral im Rahmen der Spezifikation des EM-Typs 10 definiert.

## Patentansprüche

1. Verfahren zur Generierung von Automatisierungsprogrammen für eine Automatisierungslösung,
wobei mittels einer in Software implementierten Entwicklungsumgebung zumindest ein EM-Typ (10) angelegt wird,
wobei der EM-Typ (10) für eine technische Einrichtung der Automatisierungslösung zumindest eine Grundfunktion (12), zumindest eine Rolle (20) und zumindest eine Basisanforderung (22) umfasst,
wobei die oder jede Grundfunktion (12) eine Definition einer Schrittkette (14) mit Schritten (16) und Transitionen (18) umfasst,
wobei die oder jede Basisanforderung (22) Anforderungen an eine Einzelsteuereinheit der Automatisierungslösung definiert und Befehle (24) und Status (26) umfasst und
wobei Befehlsaufrufe (19) der Schritte (16) und Statusabfragen (21) der Transitionen (18) der Schrittkette (14) mit einer Rolle (20) und die Rolle (20) wiederum mit einem Befehl (24) oder einem Status (26) einer Basisanforderung (22) verknüpft sind bzw. ist.

2. Verfahren nach Anspruch 1, wobei mittels eines Softwaregenerators automatisch ein Automatisierungsprogramm in Form eines Schritt- und Transitionsprogramms einer Ablaufsteuerung erzeugt wird, indem als Schritte (16) und Transitionen (18) auf Basis der in der Schrittkette (14) des EM-Typs (10) definierten Befehlsaufrufe (19) der Schritte (16) und Statusabfragen (21) der Transitionen (18) und deren über jeweils eine Rolle (20) bestehende Verknüpfung mit Befehlen (24) und Status (26) einer Basisanforderung (22) eine jeweils hardware- und/oder projektspezifische Implementierung des jeweiligen Befehls (24) oder Status (26) eingesetzt wird.

3. Computerprogramm mit Programmcodemitteln, um alle Schritte von jedem der Ansprüche 1 oder 2 durchzuführen, wenn das Computerprogramm zur Generierung von Automatisierungsprogrammen auf einem Programmiergerät ausgeführt wird.

4. Computerprogrammprodukt mit Programmcodemitteln, die auf einem computerlesbaren Datenträger gespeichert sind, um das Verfahren nach einem der Ansprüche 1 oder 2 durchzuführen, wenn das Computerprogrammprodukt zur Generierung von Automatisierungsprogrammen auf einem Programmiergerät ausgeführt wird.

5. Programmiergerät mit einer Verarbeitungseinheit und einem Speicher, wobei in den Speicher ein Computerprogramm nach Anspruch 3 geladen ist, das zur Generierung von Automatisierungsprogrammen im Betrieb des Programmiergeräts durch dessen Verarbeitungseinheit ausgeführt wird.
